# EUROPEAN PATENT APPLICATION

(11) **EP 2 209 334 A1**
(43) Date of publication of application: **21.07.2010**
(21) Application number: 09000482.1
(22) Date of filing: 15.01.2009
(51) Int. Cl.: H04W 24/00

(54) **Measurement arrangement for performing quality of service measurements of a telecommunication network**

(71) Applicant: SwissQual License AG, 4528 Zuchwil (CH)
(72) Inventor: Juric, Pero, 4513 Langendorf (CH); Bobst, Hanspeter, 4702 Oensingen (CH)
(74) Representative: Fischer, Britta Ruth

(57) **Abstract**

The invention relates to a measurement arrangement (20) for performing quality of service measurements of a telecommunication network, with one or more measurement units (21.1, 21.2), each measurement unit (21.1, 21.2) comprising one or more measurement devices (23.1, 23.2) and a measurement probe (22; 22.1, 22.2) for controlling the one or more measurement devices (23.1, 23.2), wherein the measurement probe (22; 22.1, 22.2) is given by a computer hardware platform (25) on which one or more virtual machines (26; 26.1, 26.2) are implemented and that each measurement device (23.1, 23.2) is assigned to a particular virtual machine (26; 26.1, 26.2).

## Description

The invention relates to a measurement arrangement for performing quality of service measurements of a telecommunication network according to the preamble of claim 1.

Determining the quality of service (QoS) of a telecommunication network, in particular a mobile network, serves as a basis for improving the service quality of the network, which might lead to enhancement of the revenue of a network provider.

Measurement arrangements that are employed for QoS measurements typically employ at least one measurement device, such as e.g. a mobile phone, and a measurement probe to which the measurement device is connected, the measurement probe being usually a computer or a device performing the functions of a computer. On the measurement probe there is installed appropriate software for controlling the measurement device such that so called "call control" and (measurement) data acquisition can be performed. With "call control" test connections (also called measurement/test channels) can be built up and stopped. The test connections are usually built up with a second measurement device which is connected to a second measurement probe (up- and down-link) or to an answering station (down-link) that can be reached by the first measurement device/first measurement probe. The measurement probe serves also for saving of the measurement results that are typically stored on a hard disk. The measurement results may also be sent to an FTP (file transfer protocol) server.

The software implemented on the measurement probe usually comprises measurement algorithms (so called assessment modules) for automatic evaluation of the measured or from the measurements derived quality parameters. Typical quality parameters comprise speech quality, video quality, radio parameters, and data quality as for SMS (short message service), MMS (multimedia messaging service), FTP (file transfer protocol), HTTP (hypertext transfer protocol), WAP (wireless application protocol), emails, UDP (user datagram protocol), and so on. The results of the evaluation of the quality parameters are then together with further parameters (such as GPS (global positioning system) data, RF (radio frequency) trace parameters and time stamps) written by the measurement probe in measurement files.

An operator of the measurement arrangement can either view the measurement/evaluation results on a separate monitoring unit with a user interface (usually a personal computer) in real time or offline at a later date (offline mode). For real-time viewing a so called reply tool is required as e.g. the application NQView by SwissQual. In offline mode the measurement/evaluation results can be stored in a database or a log file before analysing them.

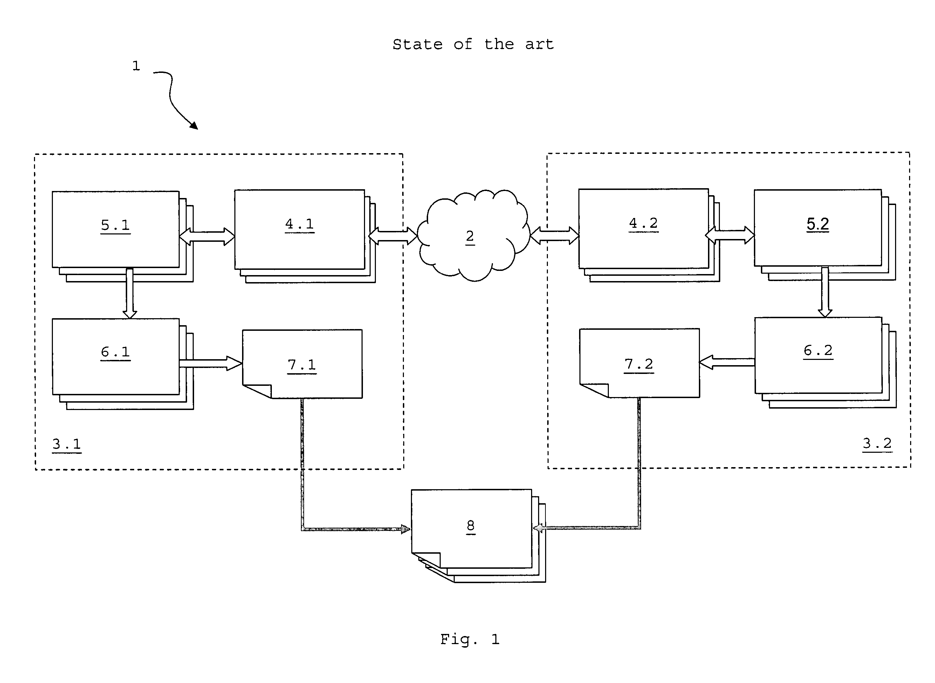

Figure 1 depicts a typical measurements arrangement 1 for determining the quality of service of a telecommunication network 2. The measurement arrangement 1 shown in Figure 1 is a so called multiple intrusive measurement arrangement. With the term "multiple" it is meant that several measurement channels can be handled in parallel. With the term "intrusive" an intrusive measurement approach is meant, wherein measurements are taken at both ends of the telecommunication network 2, such that reference test signal(s) are inserted into the channel(s) under test. The measurement arrangement 1 comprises two measurement units 3.1 and 3.2, each assigned to one end of the telecommunication network 2 to be evaluated. One of the measurement units 3.1, 3.2 functions as sending device, the other measurement unit 3.2, 3.1 as answering device, i.e. measurements can be taken in both directions (up- and down-link). Each measurement unit 3.1, 3.2 comprises one or more measurement devices 4.1, 4.2 and measurement probes 5.1, 5.2 for controlling the respective measurement devices 4.1, 4.2. For the intrusive measurement approach a measurement probe 5.1, 5.2 has to establish at least one test channel for the measurement it shall perform. Additional telecommunication network resources are typically used, which means that they will not be available for the customer's traffic. Intrusive testing implies minimum two measurement probes for each measurement/test channel, one for insertion of the test signals and the other for the measurements. Usually the measurement probes 5.1, 5.2 are symmetric, which means the measurement can be done on both sides of the measurement/test channel. On the measurement probes 5.1, 5.2 is implemented appropriate software comprising assessment modules 6.1, 6.2. A test connection (measurement/test channel) is established between the measurement probes 5.1, 5.2/the measurement devices 4.1, 4.2 by performing a call control. The measurements taken by the measurement devices 4.1, 4.2 are gathered and evaluated by the measurement probes 5.1, 5.2 and stored as measurement/evaluation results in measurement files 7.1, 7.2 on a respective hard disk. The measurement/evaluation results in the measurement files 7.1, 7.2 can be transmitted to a separate monitoring unit for reporting and presentation to the operator and further analysis, wherein further reporting, presentation and analysis files and/or databases 8 can be generated. In single channel measuring only one measurement/test channel is used.

In a non-intrusive measurement arrangement only one measurement unit with measurement device(s) and measurement probe(s) is used. In this case the measurement probe calls an arbitrary number (e.g. the number for news information, meteorology information or an answering station/machine) and only one end of the telecommunication network is measured or the telecommunication network is only measured in one direction (down link), respectively. The non-intrusive measurement approach typically only monitors network traffic without the need for dedicated measurement/test channel. It monitors available traffic in the telecommunication network only from one side of the channel hence there is generally no need for insertion of additional test signals. Intrusive testing is, however, usually more accurate than non-intrusive testing since the quality assessing modules (the measurement probes) have access to both sides of the measurement/test channel(s).

A smart phone can for example be used for implementing the measurement probe. In this case the measurement probe and the assessment modules form part of the measurement device given by the smart phone. The measurement application software then runs directly on the smart phone as is e.g. the case for the application "QualiPoc" by SwissQual.

Stationary and mobile embodiments are possible for the measurement device. The measurement device can either be a mobile device or a fix network device such as e.g. an ISDN (integrated services digital network), PSTN (public switched telephone network) or VoIP (voice over internet protocol) end user terminal.

The measurement probe can be used for radio frequency optimization of a telecommunication network. In this case no separate monitoring unit is required as reporting and analysis tool as the measurement/evaluation results are directly (mostly in real time) read off and tracked on the measurement probe.

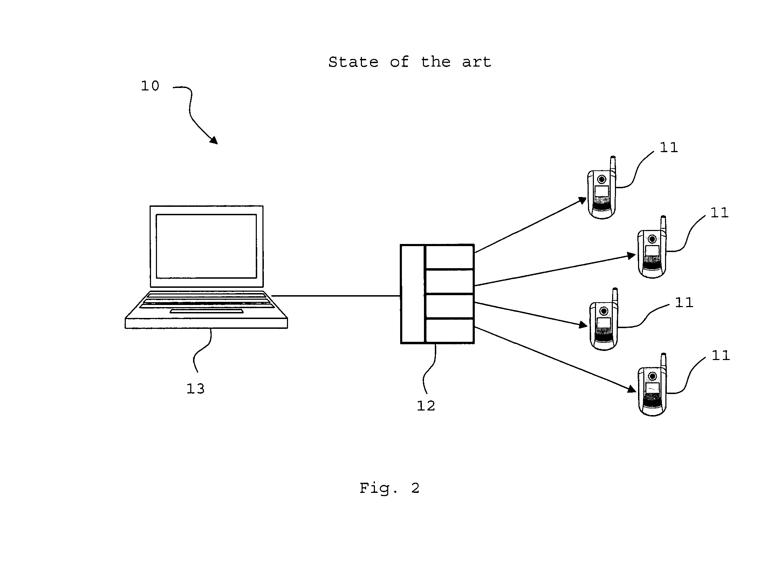

Figure 2 shows an example of a known measurement arrangement 10 with exemplarily four measurement devices 11 in form of mobile phones. The measurement devices 11 are connected via an interface box 12 to a control unit 13 in form of a personal computer (PC) with a user interface for e.g. real time viewing. Audio and data signals of the measurement devices 11 are transmitted to the personal computer 13 via the interface box 12. The control unit 13 has measurement software installed on it and performs as well the functions of the above-mentioned measurement probe as the functions of the above-mentioned monitoring unit. The measurement arrangement 10 is also known as single PC approach. In case of multiple data tests such as throughput tests (also called "throughput measurements") the network routing table of the personal computer 13 has to be generated and stored by it accordingly. Therefore the personal computer 13 cannot be used additionally as a normal office PC as it cannot be connected to the internet or an intranet without resetting the network routing table back to their initial states/settings.

The measurement arrangement 10 shown in Figure 2, while being economically priced, does mostly not represent a realistic measurement scenario as it does not reflect typical subscriber's/user's behaviour. In a typical telecommunication network each subscriber/user has one mobile phone or data card per PC, the mobile phone or data card being represented by the measurement devices 11 in the test scenario. Furthermore, typical data tests like e.g. throughput tests that usually use the Microsoft Internet browser or Firefox cannot be performed as these web browsers cannot handle more than one simultaneous data session. Also the measurements taken during such a throughput test are often not accurate if several test channels are run in parallel, as the measurement results may be distorted due to communication overhead. The measurement devices 11 can usually first be used after corresponding vendors' software such as drivers, communication tools, etc. has been preinstalled. These drivers are typically designed for one installation per operating system (or personal computer). Hence, there is no guarantee that the driver application behaves as it is supposed to if more instances of the same driver application run in parallel as is the case with the measurement arrangement 10 with the several measurement devices 11 shown in Fig. 2. Further, the data flow from the several measurement devices 11 has to be split for evaluation which requires a complex solution. Moreover, only one operating system can be used for all measurement devices.

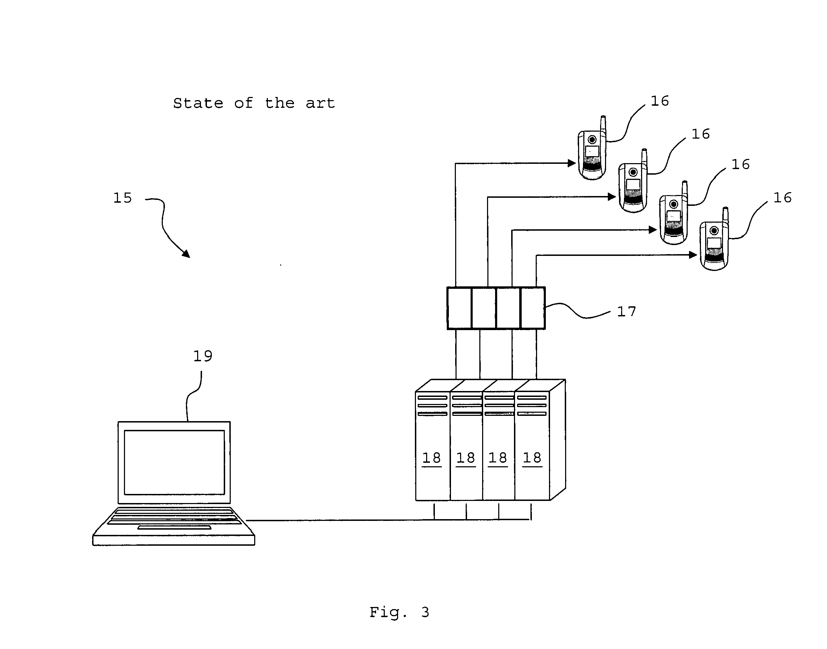

Figure 3 shows a further known measurement arrangement 15 representing a multiple hardware PC approach. The measurement arrangement 15 comprises exemplarily four measurement devices 16 in form of mobile phones that are connected via an interface box 17 to hardware measurement PCs 18 with measurement software implemented thereon. The measurement PCs 18 form the measurement probe in this case. Each measurement device 16 is attributed one measurement PC 18, each comprising one operating system. The measurements PCs 18 are connected via a module communication link to a monitoring unit 19 given by a personal computer with a user interface for e.g. real time viewing.

As for each measurement device 16 one personal computer 18 is required, the costs for hardware, service and maintenance are rather high. Furthermore, while accurate measurements can be performed, the number of measurement/test channels is limited to the number of provided measurements PCs, i.e. the measurement arrangement 15 shown in Figure 3 has low flexibility with respect to the number of measurement/test channels. Flexibility is also low with respect to the power the measurement devices 16 might require. For example, if initially all measurement device were 2G (second generation) mobile phones and accordingly the measurement PCs 18 were configured for 2G mobile phone, then if one of the 2G mobile phones has to be replaced by a 4G (fourth generation) mobile phone, the performance of its measurement PC 18 might not be sufficient for the 4G mobile phone and the entire measurement PC 18 would have to be replaced.

It is an object of the invention to provide a measurement arrangement for performing QoS measurements of a telecommunication network, the measurement arrangement having one or more measurement units, each measurement unit comprising one or more measurement devices and a measurement probe for controlling the one or more measurement devices, wherein the measurement probe fulfils at least part of the following requirements regarding the number of possible measurement/test channels that can be established, flexibility with respect to the number of measurement/test channels, price, supported measurement devices and network technologies (e.g. 2G, 3G and/or 4G), operating temperature, weight and size (which are both of importance for mobility and ease of handling), energy supply (e.g. by an implemented battery, uninterruptable power supply (UPS), a 12V-car battery), energy consumption, the phone antenna of the measurement device (i.e. an internal or external phone antenna), backup and restore possibilities and real-time monitoring.

Regarding the requirements of the number of possible measurement/test channels that can be established and the flexibility with respect to the number of measurement/test channels it is noted that in a benchmarking measurement/test scenario there are typically at least two measurement/test channels run in parallel for the comparison of at least two different network providers and/or network technologies. Often the operators of the measurement scenario require between two and six measurement/test channels per measurement arrangement with the number of measurement/test channels ideally being flexible. For example, if a large amount of measurement data has to be collected (as e.g. being the case with radio frequency scanners as measurement devices for QoS measurements of 4G networks) then less measurement/test channels would be required but basically all quality parameters would have to be recorded. However, for - with respect to the amount of data - less challenging measurement scenarios, such as e.g. radio frequency coverage, the operator would require as many measurement/test channels as possible.

The number of measurement/test channels typically corresponds to the number of employed measurement devices. For most accurate measurement results, there is ideally one measurement computer per measurement/test channel, on which an operating system is implemented, i.e. there is one operating system per measurement/test channel. The reason for this is that with the measurement/test scenario, in which the measurement arrangement is used, the normal operation/usage of the measurement device (for example a mobile phone or a data card) shall be simulated, when a device corresponding to the measurement device is used by user/subscriber. Moreover, it is not possible to run several so called http-based tests in parallel with Microsoft Internet Explorer or Firefox (that are typically employed), when the used web browsers run under the same operating system. Also the typical throughput data tests are usually falsified if they are performed as several parallel data sessions on the same operating system. Hence, the measurement probe of the measurement arrangement should be able to control several measurement devices and to perform several measurement tests in parallel. Furthermore, there is ideally one measurement computer and one operating system assigned to each measurement device.

The price of a measurement probe should be as economically as possible so that the corresponding measurement arrangement can be a money-safer for the network providers.

It is often required by the operators that the measurement arrangement supports several different measurement devices and network technologies. In the majority of cases several different network technologies such as 2G, 3G and 4G are measured and evaluated in parallel. This is particularly important if a network provider wants to compare his own network with a number of competitive networks in a benchmarking measurement/test scenario. The competitive networks and the provider's network are usually on different technology levels. For the measurement devices it is typically desired that test phones are used that correspond to the mobile phones most commonly used by the network subscribers. As the subscribers often change their phones due to technology advancements, it is required that ever and anon new phones can be integrated into the measurement arrangement as measurement devices such that they can be controlled by the already existing measurement probe and that access to their audio and video data is possible through the existing measurement probe. The test phones are usually controlled via an USB interface. The audio interface is usually connected to the measurement probe via a sound card or a corresponding hardware device with A/D-converter.

Apart from mobile phones often data cards have to be integrated as measurement devices into the measurement arrangement. Data cards are commonly used in data tests. Further, radio frequency scanners (as e.g. offered by the companies PCTEL or DRT, respectively) need often to be integrated into the measurement arrangement as measurement devices for providing radio frequency network parameters. The radio frequency scanners usually generate a huge amount of measurement data which often causes a bottleneck when transferring the data via a personal computer interface such as an USB interface. Typically a measurement arrangement as depicted in Figure 1 generates up to several 100 Mbytes of data per hour which might cause problems as flooding the local hard disk of the measurement probe in a short period of time and, hence, requires very fast internal hard disks within the measurement probes. Also, a rather large external storage medium is required for storing such a huge amount of data for later analysis. The measurement arrangement according to the invention should be able to handle large amounts of data.

Measurement arrangement and thus measurement probes are often operated at extreme temperatures and air humidity. The ambient air temperature may typically vary between -20 degrees Celsius and +40 degrees Celsius and the air humidity may typically vary between 0% and 80%. The hardware components of the measurement arrangement and in particular the measurement probe have to be configured such, that they still function properly even under extreme weather conditions within these limits.

For taking QoS measurements the measurement probe is usually deployed in a measurement vehicle. As measurement vehicles public transportation such as taxis, busses, trains or vehicles of delivery services may be used for which a high mileage/a high number of miles travelled on various geographical routes is typical. As the measurement probe has to be carried quite often from an office to the measurement vehicle and vice versa it is advantageous if the size of the measurement probe is relatively small and if the weight of the measurement probe is relatively low. Small and light-weighted measurement probes can also be more easily secured in the measurement vehicles, so that the hardware of the measurement probe has low sensitivity against mechanical shocks that may occur during a ride with the measurement vehicle. The measurement arrangement according to the invention is preferably small in size and light-weighted.

The energy supply of the measurement arrangement typically varies depending on if the measurement arrangement is used indoors or outdoors. For indoor use within a fix network the measurement arrangement with the measurement probe can be connected to the mains power network, e.g. a 230V-power network. For outdoor use in a measurement vehicle the measurement probe is mostly connected via the cigarette lighter outlet to the 12V-car battery. Especially in outdoor applications it is of importance to keep the energy consumption of the measurement probe low. The measurement probe and the measurement device of the known measurement arrangement 15 depicted in Figure 3 has for example the rather large energy consumption of 150 Watt. Furthermore, when the measurement vehicle is turned off for a longer period, the measurement probe should also be shut down to safe energy. Turning the measurement vehicle for a short period of time off should, however, not affect the normal operation of the measurement probe. The measurement probe has furthermore to be secured against power failure, i.e. for a required minimum period of time an energy supply without interruptions has to be guaranteed. Usually it is required that the measurement probe and the measurement devices of the measurement arrangement can function for a couple of minutes without external energy supply.

The antennae of the measurement devices can be arranged either internally or externally. Typical mobile phone users use mobile phones with internal antennae. Usually only in cars in hand free mode an external antenna is used. However, often network provides require for a measurement scenario the use of a measurement arrangement with measurement devices with external antennae as this allows for better controlling of the shielding by the vehicle body.

Even if the measurement probes of a measurement arrangement are robustly built it might happen that the measurement arrangement does not start anymore due to a virus or system damage. In such cases it is important to have a backup copy of the software installed on the measurement probe. Hence, performing of a backup should be possible, especially for all measurement/test channels. Furthermore, the backup shall in particular be such that if measurements from one measurement/test channel cannot be taken anymore due to system failure then it should be possible to perform just a recovery of the software components relevant for the one measurement/test channel.

During data measuring and evaluation by the measurement probe it is often required that the operator has real-time access to the measurement results. With real-time access system failures and warnings can be detected earlier. Real-time access to the measuring and the measurement results is in particular important for measurement scenarios aimed at radio frequency optimization where often a separate external computer in form of a laptop is connected to the measurement probe via the local area network (LAN) or a Wi-Fi network.

In order to implement these and still further objects of the invention, which will become more readily apparent as the description proceeds, a measurement arrangement is provided that comprises one or more measurements units, with each measurement unit comprising one or more measurement devices and a measurement probe for controlling the one or more measurement devices. The measurement probe is given by a computer hardware platform on which one or more virtual machines are implemented. Each measurement device is assigned to a particular virtual machine. A virtual machine can also be called virtual computer machine. The measurement probe of the measurement arrangement according to the invention is preferably configured such that the number of virtual machines is adjustable in dependence on the number of measurement devices. To each virtual machine there can be assigned just one measurement device. Alternatively, there can be more than one measurement device being assigned to one virtual machine. On each virtual machine there is implemented and run at least one operating system. Different operating system can be implemented and run on different virtual machines, i.e. the operating system implemented on one virtual machine can differ from the operating system implemented on another virtual machine.

By the expression "virtual machine" it is understood a software implementation of a hardware machine (computer) that executes programs like a real physical machine. Herein by "virtual machine" is meant a so called system virtual machine that supports the execution of a complete operating system and that allows intelligent and controlled sharing and distribution of the underlying real physical machine resources (i.e. the computer hardware platform of the measurement probe) between different virtual machines, each running its own operating system, Multiple operating systems environments can coexist on the same computer hardware platform, in strong isolation from each other. The virtual machines are completely isolated from a server machine and other virtual machines. If one virtual machine crashes, this has advantageously no influence on the other virtual machines. Data cannot arrive from one virtual machine at another virtual machine; application programs have to communicate via specific configured network connections. The virtualization is preferably achieved by a so called virtual machine monitor.

Alternatively to the intelligent sharing and distribution of the underlying real physical machine resources an emulation layer can be generated by the virtualization software that emulates each (guest) operating system that it has access to the entire physical machine resources, this approach being, however, less efficient and thus slower as the approach with the virtual machine monitor.

With operating system virtualization by means of a virtual machine monitor each virtual machine comprises its own virtual hardware components such as virtual RAM (random-access memory), virtual CPU, virtual HDD (hard disk drive) and so on, onto which the (guest) operating system and the application software are loaded. The virtual hardware components can be easily standardized to ensure compatibility. The operating system of each virtual machine recognizes - independently of the actual computer hardware platform - a consistent and normalized set of hardware components as would be the case with a physical hardware machine/computer.

A virtual machine is given by in data files encapsulated components. Thus, a virtual machine can be easier and faster than its hardware counterpart stored, copied, shifted and provided as a single file or directory. Virtual machines comprising complete systems with configured application software, operating systems, BIOS and virtual hardware components can be shifted from one server to another server within seconds as no down time is necessary and continuous load consolidation is provided. Virtualization leads to a more efficient utilization of the information technology resources and to higher flexibility.

In principle, the virtual infrastructure is achieved by dynamic allocation of physical resources to certain application requirements. The virtualization on an operating system level provides application programs virtually with an entire runtime/operating system environment within an enclosed container, each container having its own kernel. No additional operating system needs to be started. The containers with the operating systems represent part of the host operating system, the host being given by the computer hardware platform. While the advantage of this virtualization concept is the good integration of the guest operating systems into the virtual containers, from inside of the containers no additional drivers or kernels can be loaded from outside of the respective container. It is pretended that the guest operating systems are provided with their own complete computer hardware with all necessary hardware components such as processor, drives, memory and so on, each guest operating system advantageously having its own kernel running with few amendments of the actual operating systems being necessary, thereby leading to a certain flexibility when compared with operating system virtualization where the guest operating systems share the same kernel as the host operating system. Examples for operating system virtualization by means of a virtual machine monitor are VMware Workstation, Microsoft Virtual PC, VirtualBox, Parallels Workstation. A further advantage of virtualization is that servers can be consolidated to virtual machines in scale-up- or scale-out-architecture (confer e.g. http://en.wikipedia.org/wiki/Virtual_machine, http://en.wikipedia.org/wiki/Platform_virtualization, http://de.wikipedia.org/wiki/Virtualisierung_(Informatik) ).

As the measurement probe of the measurement arrangement according to the invention comprises a virtual machine for each measurement device, it can control several measurement devices and run several measurement tests in parallel.

The measurement arrangement according to the invention has all the advantages of the measurement arrangement 15 depicted in Figure 3, in particular with respect to the accuracy of the measurement results, plus further advantages. For example, booting of the operating systems is faster when compared to the measurement arrangement of Figure 3 as all operating systems are implemented on the same hardware component (the computer hardware platform) and hence only this one hardware component has to be run up. The same applies to the shutting down of the operating systems. This is in particular advantageous for outdoor applications in a measurement vehicle which is sometimes stopped/shut down.

System backup and recovery are simpler and faster as with the measurement arrangement 15 shown in Figure 3 where backup and recovery involves an image process and the regularly creating of the disk images of the hard disks of the measurement PCs 18. For the measurement probe of the measurement arrangement according to the invention recovery of one of the virtual machines is performed by simple copying the corresponding previously stored directory or file of the respective virtual machine. With a simple copy command a backup directory/file can be quickly obtained and in case of a failure expeditiously restored. The damage caused by computer viruses can also be taken care of more easily than for the measurement arrangement 15 of Figure 3 as a simple reinstallation of a virtual machine with its operating system can be done by a copying process. Also the possibility of hardware failure is lower when compared to the measurement arrangement 15 of Figure 3 as less hardware components are used.

If the computer hardware platform of the measurement probe of the measurement arrangement of the invention shall be upgraded (e.g. for increasing the CPU's (central processing unit's) performance or memory performance) then only one hardware component needs to adjusted/updated or changed and all virtual machines can benefit from the upgrade. For the measurement arrangement 15 of Figure 3 all measurement PCs 18 need to be adjusted/upgraded or changed.

Having one virtual machine and a corresponding operating system associated with one measurement device and hence one measurement/test channel leads to an appropriate and accurate simulation of the user's network behaviour while keeping hardware costs and hardware size and weight low due to the virtual nature of the virtual machines of the measurement probe when compared to the known measurement arrangement 15 depicted in Figure 3.

Also maintenance costs and information technology costs for the measurement probe of the measurement arrangement of the invention are lower as only one hardware component in form of a computer hardware platform is used for the measurement probe. Moreover, the production costs of the measurement probe with the virtual machines are lower as there are less hardware components in the corresponding list of items. The hardware components that can be used for the computer hardware platform of the measurement probe usually meet the above-mentioned requirements regarding ambient temperature and air humidity.

As the measurement probe of the measurement arrangement according to the invention has only one hardware component with the rest of the components being of virtual nature, energy consumption is lower when compared to the energy consumption of the measurement PCs 18 depicted in Figure 3. Hence, the demands on the energy supply are lower for the measurement arrangement of the invention. The same applies to the demands on cooling of the measurement probe.

Today measurement devices are usually connected via an USB (universal serial bus) interface, in particular an USB 2.0 interface. By using virtual machines one or more USB interfaces can be assigned to each virtual machine, wherein one USB interface cannot be shared by several virtual machines. Such the use of an USB hub for connecting the measurement devices to the measurement probe and thus the occurrence of a bottleneck for huge amounts of data can be advantageously avoided. By directly assigning an USB interface to a virtual machine the entire bandwidth can be exploited for each USB interface which is in particular important if 3G or higher generation phones, scanners or data cards are connected to the USB interfaces as measurement devices, as these measurement devices usually yield large amounts of data.

Further advantageous features and applications of the invention can be found in the dependent claims as well as in the following description of the drawings illustrating the invention. In the drawings like reference signs designate the same or similar parts throughout the several figures of which:
Fig. 1 schematically shows a first known measurement arrangement for performing QoS measurements,
Fig. 2 schematically shows a second known measurement arrangement for performing QoS measurements,
Fig. 3 schematically shows a third known measurement arrangement for performing QoS measurements,
Fig. 4 schematically shows a measurement arrangement according to the invention, and
Fig. 5 schematically shows a measurement probe of a measurement arrangement according to the invention.
Figures 1 to 3 have been described in the introductory part of the description and reference is made thereto.

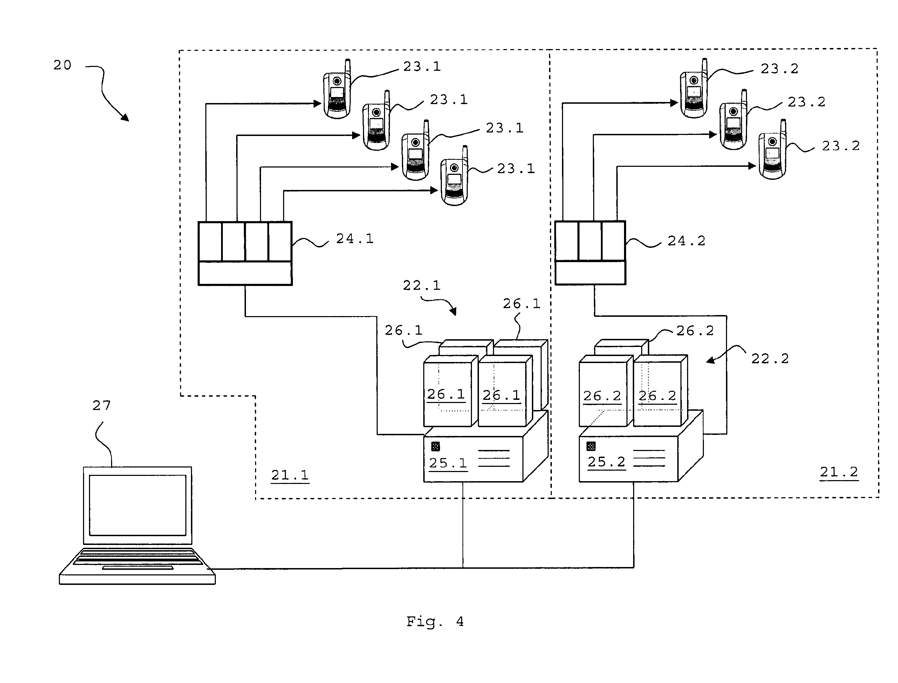

Figure 4 shows a measurement arrangement 20 according to the invention with a first measurement unit 21.1 and a second measurement unit 21.2. The measurement units 21.1 and 21.2 can be run in parallel. Each measurement unit 21.1, 21.2 comprises a measurement probe 22.1, 22.2 to which measurement devices 23.1, 23.2 in form of mobile phones with external antennae are connected via interfaces 24.1, 24.2. The first measurement unit 21.1 comprises exemplary four measurement devices 23.1 and the second measurement unit 21.2 comprises exemplarily three measurement devices 23.2. The interfaces 24.1, 24.2 comprise at least one slot for each measurement device 23.1, 23.2 that shall be connected to the respective interface 24.1, 24.2. The interfaces 24.1, 24.2 may for example be USB hubs. The measurement arrangement 20 can for example be placed in a measurement vehicle.

The measurement probes 22.1, 22.2 each comprise a computer hardware platform 25.1, 25.2 as physical machine resource. On the respective computer hardware platforms 25.1, 25.2 there are implemented virtual machines 26.1, 26.2 with the number of virtual machines 26.1, 26.2 corresponding to the number of measurement devices 23.1, 23.2 of the respective measurement unit 21.1, 21.2, i.e. for the first measurement unit 21.1 there are four virtual machines 26.1 and for the second measurement unit 21.2 there are three virtual machines 26.2. Each measurement device 23.1, 23.2 is allocated to a particular virtual machine 26.1, 26.2 for controlling and measurement acquisition and evaluation by the respective virtual machine 26.1, 26.2. Each virtual machine 26.1, 26.2 has its own operating system implemented thereon and has its own kernel running. Different operating systems on different virtual machines 26.1, 26.2 are possible.

The number of virtual operating systems 26.1, 26.2 is adjustable to the number of measurement devices 23.1, 23.2 by implementing/generating further virtual machines or by deleting/removing already implemented virtual machines, respectively, thereby altering the number of measurement/test channels. Hence, the measurement arrangement 20 of the invention is flexible with respect to the number of measurement/test channels. Of course, there can be more then two measurement units 21.1, 21.2 that can be run in parallel, if the power provided by the first and the second measurement unit 21.1, 21.2 is not sufficient for the measurement devices 23.1, 23.2 or if more power demanding measurement devices (e.g. radio frequency scanners, 4G mobile phones) shall be used.

The virtual machines 26.1, 26.2 can control the measurement devices 23.1, 23.2 such that a test connection to/within a telecommunication network is built whose quality of service is then tested and that measurement data (e.g. audio and data signals) is collected that is then evaluated by the virtual machines 26.1, 26.2, wherein each virtual machine 26.1, 26.2 controls that particular measurement device 23.1, 23.2 and evaluates the measurement data of that particular measurement device 23.1, 23.2 that is allocated to it.

The measurement probes 22.1, 22.2 are connected via cable or wirelessly to a separate monitoring unit 27 that is preferably given by a personal computer in form of a laptop with a user interface that can be easily placed inside a measurement vehicle. The monitoring unit 27 can alternatively be realized by the measurement probes 22.1, 22.2 themselves in case they are provided with a display/monitor. Appropriate software for performing the functions of the monitoring unit 27 can be implemented on the computer hardware platforms 25.1, 25.2 and/or on one of the virtual machines 26.1, 26.2. Preferably one monitoring unit 27 is provided for each measuring probe 22.1, 22.2. The measurement results are transmitted from the measurement probes 22.1, 22.2 to the monitoring unit 27 for real-time presentation to the operator and further analysis. The monitoring unit 27 is also used for selection and configuration of the measuring tests to be performed by the measurement probes 22.1, 22.2. The measurement results can be stored in data files for later analysis on an office personal computer to which they can be transferred on a storage medium such as a disk, a CD-ROM, or an USB-stick.

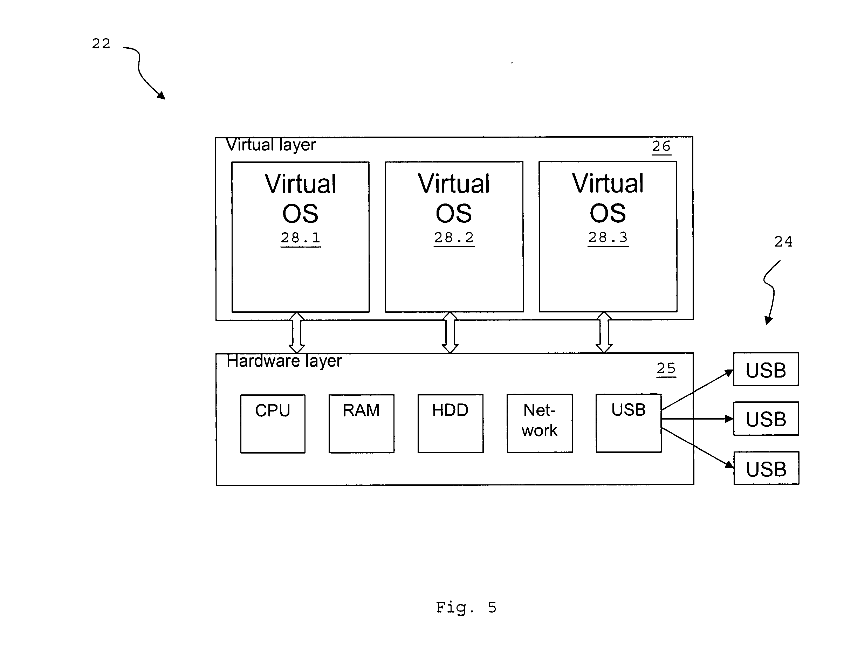

Figure 5 schematically shows a measurement probe 22 of a measurement arrangement 20 according to the invention as shown in Figure 4. The measurement probe 22 comprises a hardware layer representing the computer hardware platform 25 and a virtual layer representing exemplarily three virtual machines 26, each with a virtual operating system environment 28.1, 28.2, 28.3 with application software such as measurement software. Of course, there can be more or less than three operating system environments formed by the virtual layer. The computer hardware platform 25 comprises as hardware components among others a central processing unit (CPU), a random-access memory (RAM), a hard disk drive (HDD), hardware components for network connection, and an interface e.g. in form of an USB interface. The hardware components of the computer hardware platform 25 represent hardware resources common to and shared by all virtual machines 26.

Via an interface 24, that can be either internal or external to the computer hardware platform 25, exemplarily three measurement devices (not shown) can be connected to the measurement probe 22. The interface 24 can be an USB interface. To avoid a possible bottleneck that might occur when transferring large amounts of data while using an external interface 24 in form of an USB hub other types of external interfaces such as a PC card or an Ethernet link (e.g. a Gigabit link or a for example a 10 or a 100 MBit LAN (local area network)) are preferred if the interface 24 shall be external. To handle large amounts of data also data compression can be performed. To avoid a possible bottleneck when transferring large amounts of data while using an USB interface 24, it is also possible use several USB interfaces 24 and to assign to each virtual computer 26 one or more USB interfaces 24, while one USB interface 24 cannot be used by several virtual computers 26.

To one virtual machine 26 with one operating system environment 28.1, 28.2, 28.3 there can be assigned either exactly one measurement device or more than one measurement device.

The CPU of the computer hardware platform 25 comprises a processor that is preferably a multiple core processor, with the number of cores preferentially corresponding to the number of virtual machines. One core is then assigned to one virtual machine 26 and one operating system environment 28.1, 28.2, 28.3. For example, if there are four virtual machines 26 then as a CPU a so called quad core premium processor is preferably used, with one core being assigned to each virtual machine 26.

The power of the CPU of the computer hardware platform 25 may be uniformly distributed to all virtual machines 26. Depending on the particular measurement/test scenario the power of the CPU may also be attributed non-uniformly to the virtual machines 26. This is e.g. advantageous if for some measurement/test channels and/or for some measurement devices more CPU-power is required than for other measurement/test channels and/or measurement devices, e.g. for a 2G mobile phone is less power required as for a 4G mobile phone. This flexibility of CPU-power distribution is of advantage for a realistic simulation of end user behaviour. Similarly it is possible to have different performance levels for the virtual machines 26, for example if for a first measurement/test channel for which a first virtual machine is responsible only 50% of the hardware resources of the computer hardware platform 25 are required in comparison to a second measurement/test channel for which a second virtual machine is responsible.

## Claims

1. A measurement arrangement for performing quality of service measurements of a telecommunication network, with one or more measurement units (21.1, 21.2), each measurement unit (21.1, 21.2) comprising one or more measurement devices (23.1, 23.2) and a measurement probe (22; 22.1, 22.2) for controlling the one or more measurement devices (23.1, 23.2), **characterized in that** the measurement probe (22; 22.1, 22.2) is given by a computer hardware platform (25) on which one or more virtual machines (26; 26.1, 26.2) are implemented and that each measurement device (23.1, 23.2) is assigned to a particular virtual machine (26; 26.1, 26.2).

2. The measurement arrangement of claim 1, wherein the number of virtual machines (26; 26.1, 26.2) is adjustable in dependence on the number of measurement devices (23.1, 23.2).

3. The measurement arrangement of claim 1 or 2, wherein more than one measurement device is assigned to one virtual machine (26).

4. The measurement arrangement of claim 1 or 2, wherein to each virtual machine (26; 26.1, 26.2) there is assigned just one measurement device (23.1, 23.2).

5. The measurement arrangement of one of the preceding claims, wherein different virtual operating systems (28.1, 28.2, 28.3) are implemented on at least some of the virtual machines (26; 26.1, 26.2).

6. The measurement arrangement of one of the preceding claims, wherein for each measurement unit (21.1, 21.2) the one or more measurement devices (23.1, 23.2) are connected to the computer hardware platform via an USB interface (24; 24.1, 24.2), a PC card or an Ethernet link.

7. The measurement arrangement of one of the preceding claims, wherein the computer hardware platform (25) of the measurement probe (22; 22.1, 22.2) for each measurement unit (21.1, 21.2) comprises a central processing unit (CPU) and wherein the power of the central processing unit is non-uniformly attributable to the virtual machines (26; 26.1, 26.2).

8. The measurement arrangement of one of the preceding claims, wherein the computer hardware platform (25) of the measurement probe (22; 22.1, 22.2) for each measurement unit (21.1, 21.2) comprises a central processing unit (CPU) with a multiple-core processor, with the number of cores of the multiple-core processor in particular corresponding to the number of virtual machines (26; 26.1, 26.2).

9. The measurement arrangement of claim 8, wherein each core is assigned to just one virtual machine (26; 26.1, 26.2).
